# EUROPÄISCHE PATENTSCHRIFT

(11) **EP 1 116 340 B1**
(45) Veröffentlichungstag und Bekanntmachung des Hinweises auf die Patenterteilung: **20.08.2003**
(21) Anmeldenummer: 99936384.9
(22) Anmeldetag: 01.06.1999
(51) Int. Cl.: H04B 7/00

(54) **VERFAHREN ZUR KOMPRIMIERTEN SCHNURLOSEN KOMMUNIKATION ZWISCHEN EINER BASISSTATION UND EINER MEHRZAHL VON MOBILTEILEN**
METHOD FOR COMPRESSED WIRELESS COMMUNICATION BETWEEN A BASE STATION AND A PLURALITY OF MOBILE PARTS
PROCEDE POUR LA COMMUNICATION CELLULAIRE COMPRIMEE ENTRE UNE STATION DE BASE ET UNE PLURALITE DE PARTIES MOBILES

(30) Priorität: 04.06.1998 DE 19825076
(43) Veröffentlichungstag der Anmeldung: 18.07.2001
(73) Patentinhaber: SIEMENS AKTIENGESELLSCHAFT, 80333 München (DE)
(72) Erfinder: PILLEKAMP, Klaus-Dieter, D-40699 Erkrath (DE)
(86) Internationale Anmeldenummer: DE9901616
(87) Internationale Veröffentlichungsnummer: WO99063681

(56) Entgegenhaltungen:
- EP-A- 0 412 327
- EP-A- 0 740 429
- TAFAZOLLI R ET AL: "A novel multiple access scheme for third generation mobile/personal communication system" 1992 IEEE INTERNATIONAL CONFERENCE ON SELECTED TOPICS IN WIRELESS COMMUNICATIONS. CONFERENCE PROCEEDINGS (CAT. NO.92TH0462-2), VANCOUVER, BC, CANADA, 25-26 JUNE 1992, Seiten 21-26, XP002120917 1992, New York, NY, USA, IEEE, USA ISBN: 0-7803-0723-2

## Beschreibung

Die Erfindung betrifft ein Verfahren zur komprimierten schnurlosen Kommunikation zwischen einer Basisstation und einer Anzahl K von Mobilteilen über eine Anzahl von K*<K physikalische Funkkanäle sowie eine Basisstation und ein Mobilteil für eine komprimierte schnurlose Kommunikation.

Aufgrund der starken Zunahme der schnurlosen Kommunikation über Funk stellt das Funkfrequenzspektrum eine knappe, nicht vermehrbare Ressource dar und sollte so effizient wie möglich ausgenutzt werden. Bei heutigen analogen und digitalen Mobilfunksystemen ist für die Dauer eines Gespräches ein physikalischer Funkkanal zwischen der Basisstation und einem Mobilteil innerhalb einer Kommunikationszelle fest zugeordnet. Zur Aufteilung der dabei zur Verfügung stehenden Übertragungsbandbreite auf die einzelnen Teilnehmer bzw. Mobilteile sind grundsätzlich drei Verfahren bekannt. Beim TDMA(**T**ime **D**ivision **M**ultiple **A**ccess) werden die Daten verschiedener Teilnehmer in unterschiedlichen Zeitschlitzen im Zeitmultiplex übertragen. Beim FDMA(**F**requency **D**ivision **M**ultiple **A**ccess)-Verfahren werden Teilnehmer auf verschiedene Frequenzbänder aufgeteilt und beim CDMA(**C**ode **D**ivision **M**ultiple **A**ccess)-Verfahren werden die Daten unterschiedlicher Teilnehmer mit unterschiedlichen Codes codiert. In der Praxis werden häufig Kombinationen von zwei dieser Verfahren verwendet. Der GSM-Mobiltelefonstandard (Global System for Mobile Communications) wendet beispielsweise eine Kombination aus TDMA und FDMA an. Für zukünftige Mobilkommunikationsstandards ist eine Kombination aus TDMA und CDMA im Gespräch.

Ein Telefongespräch besteht zu einem gewissen Prozentsatz aus Sprachpausen. Auch bei der Datenkommunikation treten starke Schwankungen der Übertragungsdatenrate auf. In der Festnetzkommunikation ist im Asynchronous Transfer Mode (ATM) das Verfahren des statistischen Multiplexens bekannt, bei dem die Sendedaten einer großen Anzahl von logischen Kommunikationsverbindungen in Datenblöcke aufgeteilt und blockweise im Zeitmultiplex statistisch auf eine geringere Anzahl von physikalischen Kommunikationskanälen verteilt übertragen werden. Dadurch kann Übertragungskapazität und auch Speicherplatz (beispielsweise eines Anrufbeantworters) optimal ausgenutzt werden.

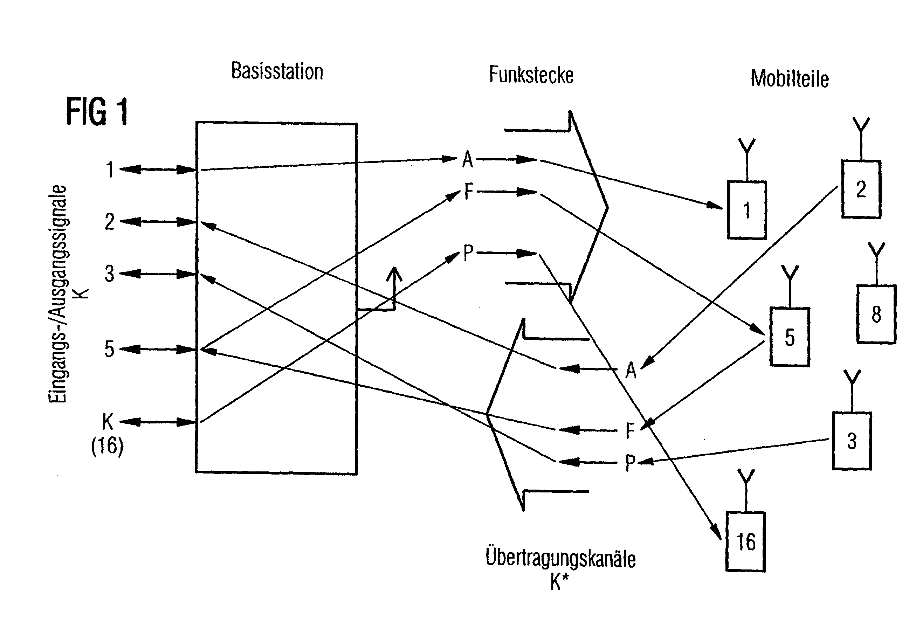

Bei TDMA-Funkübertragungssystemen scheiterte der Einsatz des statistischen Multiplexens bisher daran, daß es sich im Gegensatz zu Festnetzverbindungen nicht um eine Punkt-zu-Punkt-Verbindung handelt, bei der an beiden Endpunkten alle Informationen über die zu übertragenden Daten vorliegen. Bei der Strecke von der Basisstation zu den Mobilteilen handelt es sich um eine Punkt-zu-Multipunkt-Verbindung (siehe schematische Darstellung in Fig. 1). Bei der Übertragungsstrecke von den Mobilteilen zur Basisstation handelt es sich umgekehrt um eine Multipunkt-zu-Punkt-Verbindung. Bei dieser Konfiguration hat nur die Basisstation die für den Aufbau einer statistisch gemultiplexten Verbindung notwendige Information.

Aufgabe der Erfindung ist es daher, ein Verfahren zur schnurlosen Kommunikation zwischen einer Basisstation und einer Mehrzahl von Mobilteilen vorzuschlagen, bei der die zur Verfügung stehende Übertragungsbandbreite möglichst effizient ausgenutzt wird.

Gelöst wird die Aufgabe durch das in Anspruch 1 definierte Verfahren zur komprimierten schnurlosen Kommunikation sowie durch die in Anspruch 15 definierte Basisstation und das in Anspruch 17 definierte Mobilteil. Vorteilhafte Weiterbildungen der Erfindung sind in den Unteransprüchen beschrieben.

Das erfindungsgemäße Verfahren zur komprimierten schnurlosen Kommunikation zwischen einer Basisstation und einer Anzahl K von Mobilteilen über K*<K physikalische Funkkanäle weist die folgenden Verfahrensschritte auf:
- Erfassung von Pausenabschnitten in den jeweiligen Sendedaten in der Basisstation und den Mobilteilen,
- Speicherung der Sendedaten in einem Sendedatenspeicher (3, 15) in der Basisstation und in den Mobilteilen,
- Speicherung der zugehörigen Sendedaten- und Sendepausen-Zeitreferenzinformation in einem Sende-Zeitreferenzspeicher (6, 17) in der Basisstation und in den Mobilteilen,
- Übermittlung der Zeitreferenzinformation von den Mobilteilen an die Basisstation,
- Ermittlung von Sendezeitintervallen der Basisstation und der Mobilteile durch eine in der Basisstation ausgebildete Steuereinrichtung (5),
Übermittlung der den einzelnen Basisstationen zugewiesenen Sendezeitintervalle von der Basisstation an die jeweiligen Mobilteile.

Bei dem erfindungsgemäßen Verfahren wird die Komprimierungsoder Konzentratorfunktion für beide Übertragungsrichtungen von der Basisstation aus gesteuert. Hierzu ist ein zusätzlicher Austausch von Information zwischen der Basisstation und den Mobilteilen erforderlich. Jedes Mobilteil teilt der Basisstation die Zeitreferenzinformation der jeweiligen Sendedaten des Mobilteiles mit, während die Basisstation, die den Zeitablauf der Kommunikation in beide Richtungen steuert, den Mobilteilen die jeweiligen Sendezeitintervalle übermittelt. So hat die Basisstation die Information über Sendezeiten und Sendepausen aller K Mobilteile und kann die Sendepausen dazu nutzen, die Daten jeweils anderer Verbindungen zu übertragen. So wird es möglich, eine Anzahl K von logischen Verbindungen über eine kleinere Anzahl von K* physikalischen Funkkanälen aufrechtzuerhalten. Der Grad der Komprimierung hängt von dem mittleren Daten-/Pausenverhältnis ab.

Die Zeitreferenzinformation vom Mobilteil an die Basisstation und umgekehrt die Information über die Sendezeitintervalle von der Basisstation an die verschiedenen Mobilteile wird vorzugsweise in einem Steuerinformationsfeld zusammen mit den Sendedaten übertragen. Der dadurch entstehende "Overhead" ist gegenüber der Einsparung an Übertragungsbandbreite durch die Komprimierung gering.

Vorzugsweise kann als Funkübertragungsverfahren zwischen Basisstation und Mobilteil ein kombiniertes TDMA/CDMA-Verfahren angewandt werden. Die Erfindung ist jedoch nicht auf ein derartiges Verfahren beschränkt, sondern kann auch bei anderen digitalen Funkübertragungsverfahren eingesetzt werden.

Vorzugsweise wird unabhängig von der Datenübermittlung von der Basisstation allen Mobilteilen in regelmäßigen Abständen ein Steuersignal zur Aktualisierung des Empfangsdatenspeichers des Mobilteiles übermittelt. Dies kann beispielsweise alle vier TDMA-Zeitrahmen erfolgen.

Die Sendedaten werden in den Sendedatenspeicher der Basis bzw. der Mobilteile vorzugsweise in Blöcken entsprechend einer festen Übertragungsdauer abgespeichert, wobei die Dauer vorteilhaft der Länge eines TDMA-Rahmens oder einem Vielfachen davon entspricht. Die Größe der Sendedaten- und Empfangsdatenspeicher ist vorzugsweise ein ganzzahliges Vielfaches dieser Blockgröße und entsprechend der maximal zulässigen Verzögerungszeit, beispielsweise 48 ms für Sprachkommunikation, gewählt.

Um eine Sprachübertragung guter Qualität sicherzustellen, wird die Datenausgabe von der Basisstation an ein angeschlossenes Kommunikationsnetz oder von dem Mobilteil an einen Benutzer so gesteuert, daß die durch die Datenzwischenspeicherung auf Sende- und Empfangsseite entstehende Sendelaufzeit für alle Kanäle immer konstant ist.

Die Sendepausen werden in den Zeitreferenzspeichern der Basisstation und der Mobilteile vorzugsweise in Form von ganzzahligen Vielfachen einer Sendedatenblocklänge gespeichert. Bei der Ausgabe der Daten von einem Mobilteil an einen Benutzer bzw. der Basisstation an ein angeschlossenes Kommunikationsnetz werden die Pausen in Abhängigkeit von der in den Empfangs-Zeitreferenzspeicher gespeicherten Zeitreferenzinformation zeitrichtig wieder in den Datenstrom eingefügt, so daß die ursprüngliche Daten-/Pausenabfolge wiederhergestellt wird.

Gemäß einem bevorzugten Ausführungsbeispiel der Erfindung stellt die Steuervorrichtung der Basisstation sicher, daß jedes Mobilteil in einem Zeitintervall, daß seiner Sendedatenspeicherlänge entspricht, mindestens einmal senden kann. So wird sichergestellt, daß ein Datenausfall nicht auftritt.

Gemäß einem weiteren bevorzugten Ausführungsbeispiel übermittelt die Basisstation den jeweiligen Mobilteilen in Abhängigkeit von der in den Sendedatenspeichern der Basisstation und der Mobilteile gespeicherten Daten, ob das Mobilteil für eine bestimmte Zeitdauer sendet und/oder empfängt oder keine diese Funktionen ausführt. Können Sendeteil und/oder Empfangsteil des Mobilteils für eine bestimmte Anzahl von Zeitschlitzen abgeschaltet werden, so läßt sich bei dem Mobilteil Strom einsparen.

Die Erfindung wird im folgenden anhand bevorzugter Ausführungsbeispiele unter Bezugnahme auf die beiliegende Zeichnung erläutert, in der
Fig. 1 eine schematische Darstellung der schnurlosen Kommunikation zwischen einer Basisstation und einer Mehrzahl von Mobilteilen ist;
Fig. 2 ein Funktionsblockdiagramm einer erfindungsgemäßen Basisstation und eines erfindungsgemäßen Mobilteils ist;
Fig. 3 eine Illustration der Funktionsweise eines bevorzugten Ausführungsbeispiels des erfindungsgemäßen Verfahren ist.

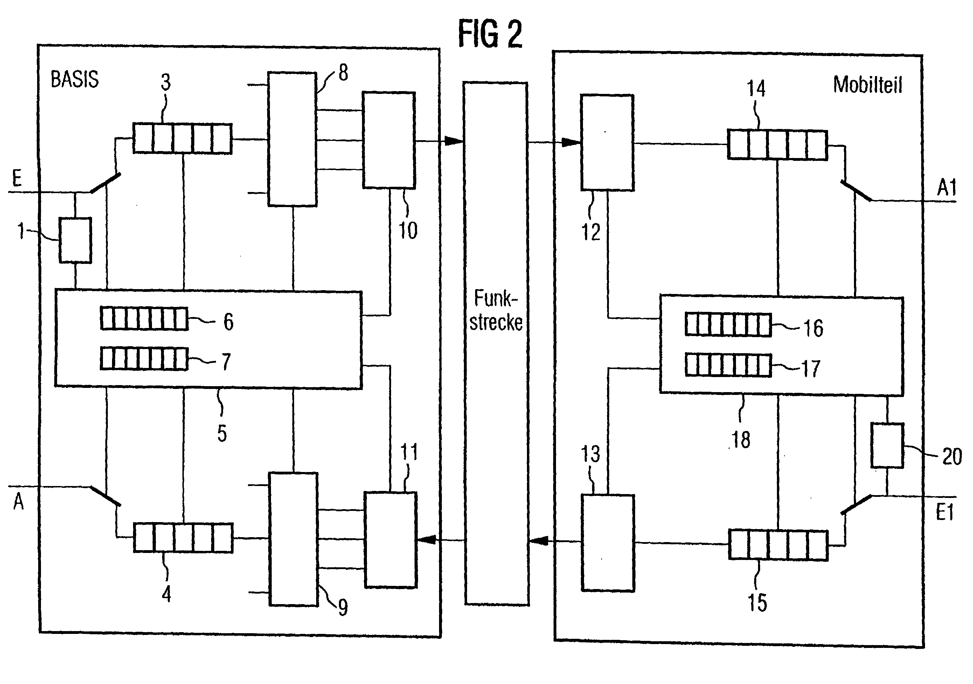

Im folgenden wird unter Bezugnahme auf Fig. 2 ein Ausführungsbeispiel einer erfindungsgemäßen Basisstation und eines erfindungsgemäßen Mobilteils erläutert. Es sei festgehalten, daß unter Mobilteil nicht notwendigerweise ein Mobiltelefon oder Kraftfahrzeug-Telefon zu verstehen ist. Unter Mobilteil ist jedes Kommunikationsendgerät zu verstehen, daß mit der Basisstation eine Multipunkt-zu-Punkt-Verbindung bildet.

Zunächst wird die in Fig. 2 links dargestellte Basisstation erläutert. Von einem Dateneingang E, der beispielsweise mit einem Telefonfestnetz oder einem Mobilfunknetz eines anderen Betreibers oder dergleichen verbunden ist, gelangen Sendedaten wie beispielsweise Sprachdaten oder Daten für die Datenkommunikation zur Basisstation. Eine Daten-/Pausenerfassungseinrichtung 1 erfaßt Datenpausen in den Eingangsdaten. Die Eingangsdaten werden anschließend im Eingangsdatenspeicher 3 in Blöcken, die einer festen Übertragungszeit, beispielsweise der Rahmenlänge eines TDMA-Rahmens entspricht, zwischengespeichert. Die Information über die zeitliche Abfolge von Daten und Pausen wird durch eine Steuereinrichtung 5 in einem Sende-Zeitreferenzspeicher 6 in Einheiten von Blocklängen abgespeichert. Je K Dateneingänge ist jeweils ein Sendedatenspeicher 3 und ein Sende-Zeitreferenzspeicher 6 vorhanden. Die Steuerlogik ermittelt aufgrund des aktuellen Inhalts des Sende-Zeitreferenzspeicher 6 die Reihenfolge, mit der die K Eingangskanäle mit Hilfe des Modulators/Konzentrators 8 an die Sendeeinrichtung 10 geleitet und über die Funkstrecke gesendet werden. Die Basisstation kann gleichzeitig maximal K* physikalische Funkkanäle aufbauen. Vor dem Aussenden der Daten fügt die Steuereinrichtung 5 dem Datenpaket zusätzlich Information hinzu, wann das jeweils empfangende Mobilteil das nächste Mal selbst senden darf.

Die über die Funkstrecke in K* physikalischen Kanälen übertragenen Daten werden von einer Empfangseinrichtung 12 des Mobilteils empfangen und in einem Empfangsdatenspeicher 14 zwischengespeichert. Die von der Basisstation übermittelte, den empfangenen Daten zugehörige Zeitreferenzinformation wird im Empfangs-Zeitreferenzspeicher 16 abgespeichert. Die Steuereinrichtung 18 des Mobilteils setzt die in dem Speicher 14 zwischengespeicherten Empfangsdaten in Abhängigkeit der in dem Empfangs-Zeitreferenzspeicher 16 zwischengespeicherten Zeitreferenzinformation wieder zu den ursprünglichen Sendedaten mit dem ursprünglichen Daten-/Pausenverhältnis zusammen und gibt diese am Ausgang A1 wieder aus, an dem beispielsweise ein Demodulator und eine Lautsprechereinrichtung zur Tonausgabe angeschlossen sind.

Die beispielsweise von einem Teilnehmer erzeugten Sprachdaten gelangen über den Dateneingang E1 des Mobilteiles an die Daten-/Pausenerfassungseinrichtung 20. Dort werden ähnlich wie in der Basisstation Datenpausen erfaßt und die zugehörige Zeitreferenzinformation in Einheiten von Datenblöcken im Sende-Zeitreferenzspeicher 17 des Mobilteils abgespeichert. Die Sendedaten selbst werden im Sendedatenspeicher 15 des Mobilteils abgespeichert.

Die Größe eines zu speichernden Datenblocks ergibt sich sinnvollerweise aus der TDMA-Zeitrahmenstrukur. Beträgt die TDMA-Rahmenlänge beispielsweise acht Zeitschlitze zu je 0,5 ms = 4 ms, so sollte ein abzuspeichernder Datenblock nicht kleiner als 4 ms oder einem Vielfachen davon sein. Aus einer beispielsweise maximal zulässigen Verzögerungszeit von 48 ms bei Sprachkommunikation und der Blocklänge von 8 ms ergibt sich die maximale Größe der Sendespeicher und Empfangsspeicher zu je sechs Blöcken.

Mittels der von der Basisstation zusammen mit den Sendedaten übermittelten Sendezeitintervallinformation steuert die Steuereinrichtung 18 des Mobilteils die Sendezeitintervalle der im Speicher 15 gespeicherten Daten durch die Sendeeinrichtung 13. Die Basisstation muß dabei sicherstellen, daß jedes Mobilteil in einem Zeitintervall, das der Sendedatenspeichergröße 15 entspricht, mindestens einmal senden darf. So wird ein Überlaufen des Sendedatenspeichers 15 und ein damit verbundener Datenverlust auch bei einem Benutzer eines Mobilteils sichergestellt, bei dem die Daten-/Pausenerfassungseinrichtung 20 keine Datenpausen feststellen kann.

Außerdem muß durch die Basisstation sichergestellt werden, daß auch Mobilteile, die keine aktuellen Sendedaten in ihrem Sendedatenspeicher 15 aufweisen, regelmäßig, beispielsweise alle vier Zeitschlitze, adressiert werden und so der Zustand ihres Sendespeichers 15 aktualisiert wird.

Die von dem Mobilteil gesendeten Daten gelangen über die Funkstrecke zu der Empfangseinrichtung 11 der Basisstation und werden anschließend durch den Demodulator/Aufweiter 9 demoduliert und auf K Kanäle aufgeweitet und in K Empfangsdatenspeichern 4 zwischengespeichert. Die von dem Mobilteil zusammen mit den Sendedaten übermittelte Zeitreferenzinformation, d. h. der Inhalt des Sende-Zeitreferenzspeichers 17 des Mobilteils, wird von der Empfangseinrichtung 11 der Basisstation der Steuereinrichtung 5 übermittelt. So "kennt" die Steuereinrichtung 5 der Basisstation den Inhalt aller Sende-Zeitreferenzspeicher 6 der Basisstation und der Sende-Zeitreferenzspeicher 17 aller Mobilteile und hat somit die Information über alle erforderlichen Sendezeiten und Sendepausen der K logischen Kommunikationskanäle. Die Steuereinrichtung 5 kann die begrenzte Ressource der physikalischen Funkkanäle K* so optimal ausnutzen. Die Wahl des Verhältnisses von K* zu K wird durch das mittlere Daten-/Pausenverhältnis des Kommunikationssystems bestimmt. Bei einem üblichen Pausenanteil von etwa 2/3 in den Sendedaten ist ein Komprimierungsverhältnis von K/K*=2 realistisch.

Mit den von dem Sende-Zeitreferenzspeicher 17 des Mobilteils übermittelten Zeitreferenzdaten wird der diesem Mobilteil zugehörige Empfangs-Zeitreferenzspeicher 7 in der Basisstation aktualisiert. So können die im Empfangsdatenspeicher 4 gespeicherten Daten unter Steuerung durch die Steuereinrichtung 5 mit der ursprünglichen Daten-/Pausenabfolge am Datenausgang A, beispielsweise an ein Telefonfestnetz, wieder ausgegeben werden.

Das Übertragungsverfahren kann beispielsweise eine kombinierte TDMA/CDMA-Struktur verwenden. Bei dem sogenannten Joint-Detection-CDMA kann eine TDMA-Struktur mit beispielsweise acht Zeitschlitzen pro Rahmen verwendet werden. Innerhalb jedes Zeitschlitzes können mehrere Datenpakete, beispielweise bis zu acht, gleichzeitig gesendet werden. Die einzelnen Datenpakete werden mit unterschiedlichen Codes über das gleiche Frequenzband gespreizt und gesendet. Vom Empfänger werden die einzelnen Datenpakete mit Hilfe der beim Empfänger bekannten Spreizcodes wieder separiert. In der praktischen Anwendung ist jedem Mobilteil ein Spreizcode zugeordnet. Werden einer Basisstation K = 16 Mobiltelefone mit acht unterschiedlichen Codes zugeordnet, so ist es möglich, daß alle acht Mobilteile gleichzeitig z. B. eine Sprachverbindung aufbauen. Die zulässige Anzahl Codes pro gesendetem Burst beträgt aber nur K*=8. Bei mehreren Codes gleichzeitig lassen sich die Daten nicht mehr separieren. Es ergibt sich somit ein Betriebszustand, wo K=16 logischen Verbindungen nur K*=8 physikalische Duplex-Funkkanäle zur Verfügung stehen. Durch das erfindungsgemäße Komprimierungsverfahren ist dies bei einem mittleren Verhältnis von Daten zu Pause in jeder Richtung von ungefähr 1:3 möglich, so daß die Hälfte der Übertragungskapazität eingespart werden kann. Da es sich bei dem Verhältnis von 1:3 um einen statistischen Mittelwert handelt, müssen die.Datenspeicher (3, 4, 14, 15) jedoch so groß sein, daß Schwankungen der Verteilung ausgeglichen werden können. Dabei ist die Größe des Datenspeichers, wie oben beschrieben, durch die maximal zulässige Verzögerungszeit, die beispielsweise noch eine ungestörte Sprachkommunikation zuläßt, begrenzt.

In der folgenden Tabelle ist ein Beispiel für den Funktionsablauf des erfindungsgemäßen Kommunikationsverfahrens mit einer Anzahl von 16 Mobilteilen über eine Anzahl K*=8 physikalische Funkkanäle beschrieben.

**Tabelle**

| **Basisstation** | | **Mobilteile** |
|---|---|---|
| Basisstation hat ermittelt, welche Datenpakete als nächstes gesendet werden müssen. | | |
| 1. Mobilteiladressen: 1 bis 8 Bit aus 16. Anm.: Es muß sichergestellt werden, daß auch Mobilteile, die keine aktuellen Sendedaten gemeldet haben, regelmäßig, mindestens alle 4 Zeitschlitze adressiert werden und ihr Sendespeicherzustand aktualisiert wird. | ⇒ | 2. Alle Mobilteile empfangen die Daten. Die 1 bis 8 adressierten Mobilteile registrieren die Adressierung. |
| 3. Zeitliche Position der Daten im zeitreferenzspeicher; 1 bis 8 mal 4 Bit, zugehörig zu den Mobilteil adressen. | ⇒ | 4. Die 1 bis B adressierten Mobilteile aktualisieren den Zeitreferenzspeicher (16). |
| 5. 1 bis 8 Datenpakte, zugehörig zu den Mobilteiladressen | ⇒ | 6. Die Daten werden dekodiert und abgespeichert, die Daten werden im Empfangsdatenspeicher (14) abgelegt. |
| 7. Mobilteilfreigabe für den nächsten Empfangszeitschlitz, 1 bis 8 Bit aus 16 | ⇒ | 8. Alle Mobilteile empfangen die Daten. Die 1 bis 8 Mobilteile, die beim nächsten Mal senden dürfen, speichern diese Freigabe. |
| | | Alle Mobilteile, die die Sendefreigabe erhalten haben, senden gleichzeitig. |
| 10. Basisstation speichert das Datenpaket in den zugehörigen Empfangsdatenspeicher (4) | ⇐ | 9. Datenpaket |
| 12. Basis aktualisiert die zugehörige Zeitreferenz (7). Anhand der Belegung der Zeitreferenz berechnet die Basisstation die aktuelle Sendereihenfolge. | ⇐ | 11. Aktuelle Belegung des Zwischenspeichers und der Zeitreferenz für die nächsten 4 Zeitschlitze. 4 Bit pro 1 bis 8 Mobilteile. |

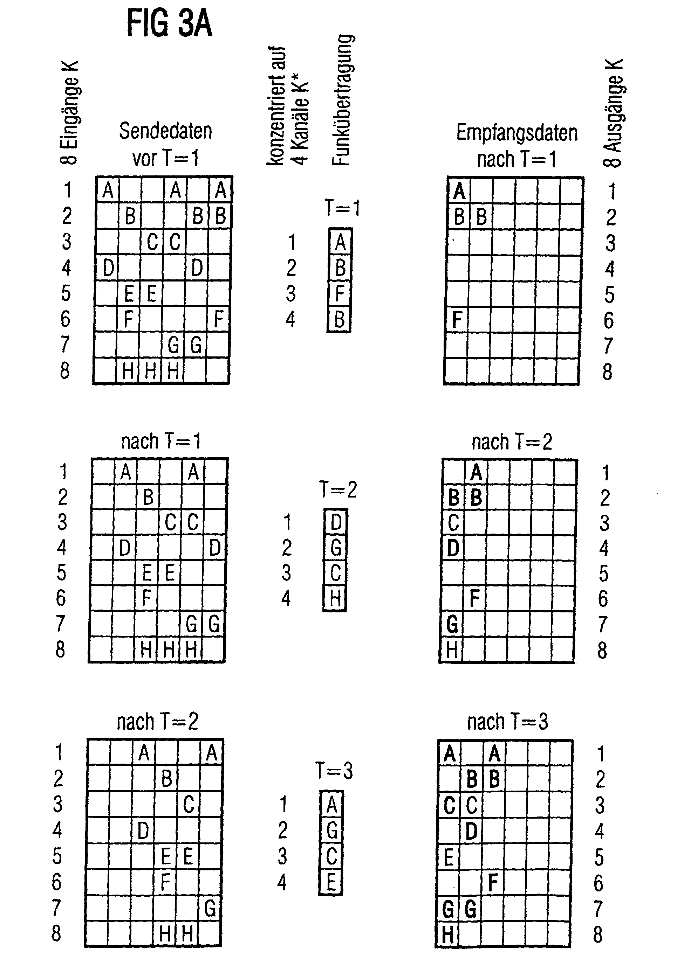

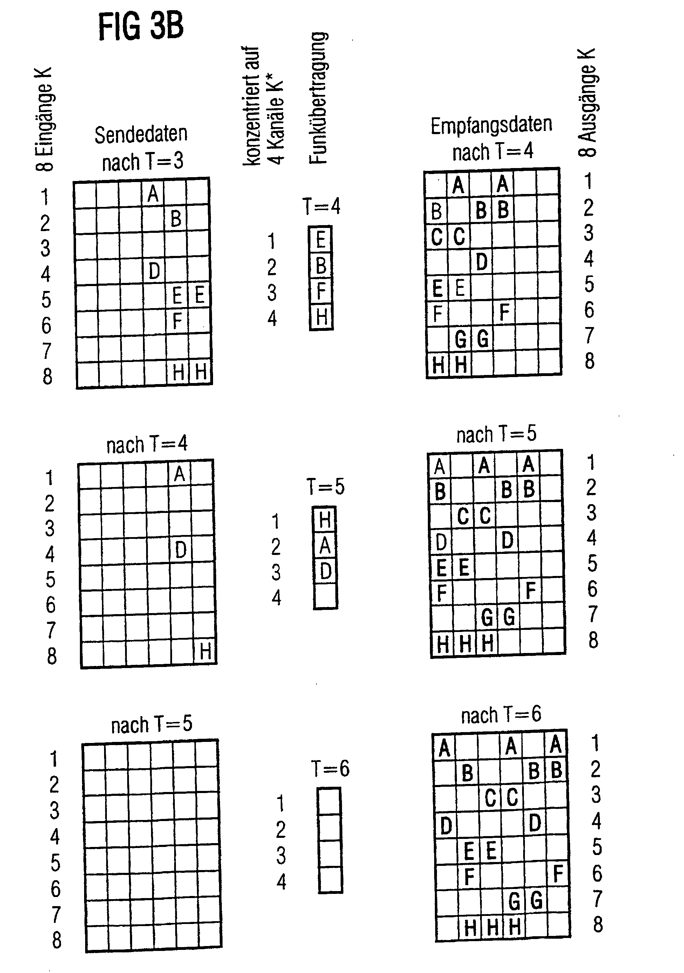

Ein weiteres Beispiel zur Illustration der Funktionsweise des erfindungsgemäßen Kommunikationsverfahrens wird im folgenden unter Bezugnahme auf Fig. 3 beschrieben.

Fig. 3 zeigt die beispielhafte Belegung von Sendedatenspeicher und Empfangsdatenspeicher einer Kommunikationsverbindung anhand eines Beispiels mit K=8 logischen Verbindungen bzw. Mobilteilen über K*=4 physikalische Funkkanäle, wobei die Kommunikationsrichtung unerheblich ist.

Jeder Buchstabe (A-H) entspricht einem Datenpaket einer bestimmten Länge. Nicht beschriftete Felder in einem Datenspeicher entsprechen Pausenblöcken. Die im Empfangsdatenspeicher (rechts) in der ersten oder zweiten Spalte nicht fett dargestellten Datenblöcke wurden nicht zeitrichtig übertragen. Die Übertragung erfolgt früher, weil Übertragungskapazität vorhanden war. Mittels der Information aus dem Zeitreferenzspeicher werden die Pakete später wieder zeitrichtig eingeordnet. Zum Zeitpunkt T=6 erkennt man, daß das gesamte Datenfeld, das im Zeitschritt T=1 im Sendedatenspeicher (links oben) war, zeitrichtig in den Empfangsdatenspeicher (rechts unten) übertragen wurde.

Dieses Beispiel gilt prinzipiell sowohl in die Richtung von der Basisstation zum Mobilteil als auch umgekehrt. Bei der Übertragung von Basisstation zum Mobilteil befindet sich der gesamte Sendedatenspeicher für alle K=8 logischen Kommunikationsverbindungen in der Basis, wobei die acht Zeilen des dargestellten Empfangsdatenspeichers auf die acht Mobilteile A-H aufgeteilt sind. Bei der Übertragung von den Mobilteilen zur Basisstation ist umgekehrt der Sendedatenspeicher (links) auf die einzelnen Mobilteile aufgeteilt und der Empfangsdatenspeicher befindet sich in der Basis.

Die Erfindung schlägt ein Kommunikationsverfahren zur komprimierten schnurlosen Kommunikation zwischen einer Basisstation und einer Anzahl K von Mobilteilen über eine Anzahl K*<K physikalische Funkkanäle vor, bei der die zur Verfügung stehende Funkübertragungsbandbreite effizient genutzt wird.

## Patentansprüche

1. Verfahren zur komprimierten schnurlosen Kommunikation zwischen einer Basisstation und einer Anzahl K Mobilteilen über eine Anzahl K*<K physikalische Funkkanäle, aufweisend die Verfahrensschritte:
- Erfassung von Pausenabschnitten in den jeweiligen Sendedaten in der Basisstation und den Mobilteilen,
- Speicherung der Sendedaten in einem Sendedatenspeicher (3, 15) in der Basisstation und in den Mobilteilen,
- Speicherung der zugehörigen Sendedaten- und Sendepausen-Zeitreferenzinformation in einem Sende-Zeitreferenzspeicher (6, 17) in der Basisstation und in den Mobilteilen,
- Übermittlung der Zeitreferenzinformation von den Mobilteilen an die Basisstation,
- Ermittlung von Sendezeitintervallen der Basisstation und der Mobilteile durch eine in der Basisstation ausgebildete Steuereinrichtung (5),
- Übermittlung der den einzelnen Basisstationen zugewiesenen Sendezeitintervalle von der Basisstation an die jeweiligen Mobilteile.

2. Verfahren nach Anspruch 1,
**dadurch gekennzeichnet,**
**daß** die Zeitreferenzinformation von den Mobilteilen an die Basisstation in einem Steuerinformationsfeld zusammen mit den Sendedaten übertragen wird.

3. Verfahren nach Anspruch 1 oder Anspruch 2,
**dadurch gekennzeichnet,**
**daß** die Sendezeitintervalle von der Basisstation an die jeweiligen Mobilteile in einem Steuerinformationsfeld zusammen mit den Sendedaten übermittelt werden.

4. Verfahren nach einem der Ansprüche 1 bis 3,
**dadurch gekennzeichnet,**
**daß** als Funkübertragungsverfahren zwischen Basisstation und Mobilteilen ein kombiniertes TDMA/CDMA-Verfahren angewandt wird.

5. Verfahren nach einem der Ansprüche 1 bis 4,
**dadurch gekennzeichnet,**
**daß** das Verhältnis der Anzahl der physikalischen Funkkanäle zur Anzahl der logischen Übertragungskanäle K*/K in Abhängigkeit von einem mittleren Daten-/Pausenverhältnis der Kommunikation zwischen Basisstation und Mobilteilen gewählt wird.

6. Verfahren nach Anspruch 5,
**dadurch gekennzeichnet,**
**daß** das Verhältnis der Anzahl der physikalischen Funkkanäle zur Anzahl der logischen Datenkanäle ½ beträgt.

7. Verfahren nach einem der Ansprüche 1 bis 6,
**dadurch gekennzeichnet,**
**daß** allen Mobilteilen von der Basisstation in regelmäßigen Abständen unabhängig von der Datenübermittlung ein Steuersignal zur Aktualisierung des Empfangsdatenspeichers (14) und des Empfangs-Zeitinformationsspeichers (16) des jeweiligen Mobilteils übermittelt wird.

8. Verfahren nach einem der Ansprüche 1 bis 7,
**dadurch gekennzeichnet,**
**daß** die Sendedaten in Blöcken entsprechend einer festen Übertragungsdatenlänge abgespeichert werden.

9. Verfahren nach Anspruch 8,
**dadurch gekennzeichnet,**
**daß** die Blocklänge der Rahmenlänge eines TDMA-Rahmens oder einem Vielfachen davon entspricht.

10. Verfahren nach Anspruch 8 oder 9,
**dadurch gekennzeichnet,**
**daß** die Größe der Sendedatenspeicher (3, 15) und Empfangsdatenspeicher (4, 14) ein ganzzahliges Vielfaches der Blockgröße ist und entsprechend einer maximal zulässigen Verzögerungszeit gewählt ist.

11. Verfahren nach einem der Ansprüche 1 bis 10,
**dadurch gekennzeichnet,**
**daß** die Datenausgabe von einem Mobilteil oder der Basisstation an einen Benutzer bzw. ein angeschlossenes Kommunikationsnetz so gesteuert wird, daß die durch die Datenspeicherung auf Sende- und Empfangsseite beeinflußte Signallaufzeit für alle Übertragungskanäle immer konstant ist.

12. Verfahren nach einem der Ansprüche 1 bis 11,
**dadurch gekennzeichnet,**
**daß** Sendepausen in den Zeitreferenzspeichern (6, 7, 16, 17) der Basisstation und der Mobilteile in Form von ganzzahligen Vielfachen einer Datenblocklänge gespeichert werden, und daß bei der Ausgabe der Daten von einem Mobilteil oder der Basisstation an einen Benutzer bzw. an ein angeschlossenes Kommunikationsnetz die Pausen in Abhängigkeit der im Empfangs-Zeitreferenzspeicher (7, 16) gespeicherten Zeitreferenzinformation zeitrichtig wieder in den Datenstrom eingefügt werden, um die ursprüngliche Daten-/Pausenabfolge wiederherzustellen.

13. Verfahren nach einem der Ansprüche 1 bis 12,
**dadurch gekennzeichnet,**
**daß** die Steuereinrichtung (5) der Basisstation sicherstellt, daß jedes Mobiltelefon in einem Zeitintervall, das der Größe seines Sendedatenspeichers (15) entspricht, mindestens einmal senden kann.

14. Verfahren nach einem der Ansprüche 1 bis 13,
**dadurch gekennzeichnet,**
**daß** die Basisstation jeweiligen Mobilteilen in Abhängigkeit von den in den Sendedatenspeichern (3, 15) der Basisstation und der Mobilteile gespeicherten Daten übermittelt, ob das Mobilteil für eine bestimmte Zeitdauer Daten sendet und/oder empfängt.

15. Basisstation für eine komprimierte schnurlose Kommunikation mit einer Anzahl K Mobilteilen über eine Anzahl K*<K physikalische Funkkanäle, aufweisend:
- einen Dateneingang,
- eine Datenpausenerfassungseinrichtung (1) zur Erfassung von Datenpausen in den Sendedaten,
- einen Sendedatenspeicher (3) zum Abspeichern der Sendedaten,
- einen Sende-Zeitreferenzspeicher (6) zum Abspeichern von Sendedaten- und Sendepausen-Zeitreferenzinformation,
- einen Modulator/Konzentrator (8) zum Komprimieren der Sendedaten auf K* physikalische Funkkanäle,
- eine Sendeeinrichtung (10),
- eine Empfangseinrichtung (11),
- einen Demodulator/Aufweiter (9) zum Aufweiten der empfangenen Daten auf K logische Kommunikationskanäle,
- einen Empfangsdatenspeicher, (4) zum Abspeichern der Empfangsdaten,
- einen Empfangs-Zeitreferenzspeicher (7) zum Abspeichern der den empfangenen Daten zugehörigen Zeitreferenzinformation,
- einen Datenausgang,
- eine Steuereinrichtung (5) zur Steuerung der Sendezeitintervalle der Sendeeinrichtung (10) und der Mobilteile, und zur Zusammenfügung der im Empfangsdatenspeicher (4) gespeicherten Empfangsdaten mittels der im Empfangs-Zeitreferenzspeicher (7) gespeicherten Zeitreferenzinformation, so daß die ursprüngliche Daten-/Pausenabfolge der Daten zur Ausgabe der Daten am Datenausgang wiederhergestellt wird.

16. Basisstation nach Anspruch 15,
**dadurch gekennzeichnet,**
**daß** der Datenausgang mit einem anderen Kommunikationsnetz verbunden ist.

17. Mobilteil für eine komprimierte schnurlose Kommunikation mit einer Basisstation, aufweisend:
- einen Dateneingang,
- eine Datenpausenerfassungseinrichtung (20) zur Erfassung von Datenpausen in Sendedaten,
- einen Sendedatenspeicher (15) zum Abspeichern der Sendedaten,
- einen Sende-Zeitreferenzspeicher (17) zum Abspeichern der zugehörigen Sendedaten- und Sendepausen-Zeitinformation,
- eine Sendeeinrichtung (13),
- eine Empfangseinrichtung (12),
- einen Empfangsdatenspeicher (14) zum Abspeichern der Empfangsdaten,
- einen Empfangs-Zeitreferenzspeicher (16) zum Abspeichern der den empfangenen Daten zugehörigen Zeitreferenzinformation,
- einen Datenausgang,
- eine Steuereinrichtung (18) zur Steuerung der Sendeeinrichtung (13) zur Aussendung von Sendedaten in Abhängigkeit von den von der Basisstation empfangenen Sendezeitintervallen, und zur Zusammenfügung der im Empfangsdatenspeicher (14) gespeicherten Empfangsdaten mittels der im Empfangs-Zeitreferenzspeicher (16) gespeicherten Zeitreferenz-Information, so daß die ursprüngliche Daten-/Pausenabfolge der Daten wiederhergestellt wird, und zur Ausgabe der Daten am Datenausgang.

## Claims

1. Method for compressed cordless communication between a base station and a total of K mobile parts via a total of K*<K physical radio channels, having the following method steps:
- detection of pause sections in the respective transmission data in the base station and in the mobile parts,
- storage of the transmission data in a transmission data memory (3, 15) in the base station and in the mobile parts,
- storage of the associated transmission data and transmission pause time reference information in a transmission time reference memory (6, 17) in the base station and in the mobile parts,
- transmission of the time reference information from the mobile parts to the base station,
- determination of transmission time intervals for the base station and for the mobile parts by means of a control device (5) which is formed in the base station,
- transmission of the transmission time intervals which are assigned to the individual base stations, from the base station to the respective mobile parts.

2. Method according to Claim 1,
**characterized**
**in that** the time reference information is transmitted from the mobile parts to the base station in a control information field together with the transmission data.

3. Method according to Claim 1 or Claim 2,
**characterized**
**in that** the transmission time intervals are transmitted from the base station to the respective mobile parts in a control information field together with the transmission data.

4. Method according to one of Claims 1 to 3,
**characterized**
**in that** a combined TDMA/CDMA method is used as the radio transmission method between the base station and the mobile parts.

5. Method according to one of Claims 1 to 4,
**characterized**
**in that** the ratio of the number of physical radio channels to the number of logical transmission channels K*/K is chosen as a function of a mean data/pause ratio for the communication between the base station and the mobile parts.

6. Method according to Claim 5,
**characterized**
**in that** the ratio of the number of physical radio channels to the number of logical data channels is 0.5.

7. Method according to one of Claims 1 to 6,
**characterized**
**in that** a control signal is transmitted to all the mobile parts from the base station at regular intervals, independently of the data transmission, in order to update the received data memory (14) and the received time information memory (16) in the respective mobile part.

8. Method according to one of Claims 1 to 7,
**characterized**
**in that** the transmission data is stored in blocks corresponding to a fixed transmission data length.

9. Method according to Claim 8,
**characterized**
**in that** the block length corresponds to the frame length of a TDMA frame, or to a multiple of it.

10. Method according to Claim 8 or 9,
**characterized**
**in that** the size of the transmission data memory (3, 15) and of the received data memory (4, 14) is an integer multiple of the block size, and is chosen to correspond to the maximum permissible delay time.

11. Method according to one of Claims 1 to 10,
**characterized**
**in that** the data output from a mobile part or from the base station to a user or to a connected communication network is controlled such that the signal delay time, which is influenced by the data storage at the transmission end and reception end, is always constant for all the transmission channels.

12. Method according to one of Claims 1 to 11,
**characterized**
**in that** transmission pauses are stored in the time reference memories (6, 7, 16, 17) in the base station and in the mobile parts in the form of integer multiples of a data block length, and in that, when the data is output from a mobile part or from the base station to a user or to a connected communication network, the pauses are inserted into the datastream at the correct times once again as a function of the time reference information which is stored in the received time reference memory (7, 16), in order to produce the original data/pause sequence.

13. Method according to one of Claims 1 to 12,
**characterized**
**in that** the control device (5) of the base station ensures that each mobile telephone can transmit at least once in a time interval which corresponds to the size of its transmission data memory (15).

14. Method according to one of Claims 1 to 13,
**characterized**
**in that** the base station transmits to the respective mobile parts, as a function of the data which is stored in the transmission data memories (3, 15) in the base station and in the mobile parts, as to whether the mobile part is transmitting and/or receiving data for a specific time duration.

15. Base station for compressed cordless communication with a total of K mobile parts via a total of K*<K physical radio channels, having:
- a data input,
- a data pause detection device (1) for detecting data pauses in the transmission data,
- a transmission data memory (3) for storing the transmission data,
- a transmission time reference memory (6) for storing transmission data and transmission pause time reference information,
- a modulator/concentrator (8) for compressing the transmission data onto K* physical radio channels,
- a transmission device (10),
- a receiving device (11),
- a demodulator/wider (9) for widening the received data onto K logical communication channels,
- a received data memory (4) for storing the received data,
- a reception time reference memory (7) for storing the time reference information associated with the received data,
- a data output,
- a control device (5) for controlling the transmission time intervals of the transmitting device (10) and of the mobile parts, and for joining together the received data, which is stored in the received data memory (4), by means of the time reference information which is stored in the reception time reference memory (7), so that the original data/pause sequence of the data is reproduced for outputting the data at the data output.

16. Base station according to Claim 15,
**characterized**
**in that** the data output is connected to another communication network.

17. Mobile part for compressed cordless communication with a base station, having:
- a data input,
- a data pause detection device (20) for detecting data pauses in transmission data,
- a transmission data memory (15) for storing the transmission data,
- a transmission time reference memory (17) for storing the associated transmission data and transmission pause time information,
- a transmitting device (13),
- a receiving device (12),
- a received data memory (14) for storing the received data,
- a reception time reference memory (16) for storing the time reference information associated with the received data,
- a data output,
- a control device (18) for controlling the transmitting device (13) for transmitting the transmission data as a function of the transmission time intervals which are received from the base station, and for joining together the received data, which is stored in the received data memory (14), by means of the time reference information stored in the reception time reference memory (16), so that the original data/pause sequence of the data is reproduced, and for outputting the data at the data output.

## Revendications

1. Procédé, destiné à la communication compressée sans fil entre une station de base et un nombre K de postes mobiles par l'intermédiaire d'un nombre K*<K de canaux radio physiques, comprenant les étapes suivantes:
- détection des sections de pause dans les données respectives d'émission dans la station de base et les postes mobiles,
- mémorisation des données à émettre dans une mémoire des données à émettre (3, 15) dans la station de base et les postes mobiles,
- mémorisation, dans une mémoire (6, 17) de la référence du temps à l'émission, de l'information correspondante de la référence du temps pour les données à émettre et les pauses d'émission, dans la station de base et les postes mobiles,
- transmission de l'information de la référence du temps des postes mobiles à la station de base,
- détermination des intervalles du temps d'émission de la station de base et des postes mobiles par un dispositif de commande (5) prévu dans la station de base,
- transmission, de la station de base aux postes mobiles respectifs, des intervalles de temps d'émission affectés aux différentes stations de base.

2. Procédé selon la revendication 1
**caractérisé par le fait**
**que** l'information de la référence du temps venant des postes mobiles et allant à la station de base est transmise, dans un champ d'information de commande, en commun avec les données à émettre.

3. Procédé selon la revendication 1 ou la revendication 2
**caractérisé par le fait**
**que** les intervalles du temps d'émission de la station de base aux postes mobiles respectifs sont transmis dans un champ d'information de commande en commun avec les données à émettre.

4. Procédé selon l'une des revendications 1 à 3
**caractérisé par le fait**
**que** l'on utilise, comme procédé de transmission radio entre la station de base et les postes mobiles, un procédé combiné TDMA/CDMA.

5. Procédé selon l'une des revendications 1 à 4
**caractérisé par le fait**
**que** le rapport du nombre des canaux radio physiques au nombre des canaux logiques de transmission K*/ K est choisi en fonction d'un rapport moyen entre les données et les pauses de la communication entre la station de base et les postes mobiles.

6. Procédé selon la revendication 5
**caractérisé par le fait**
**que** le rapport du nombre des canaux radio physiques au nombre des canaux logiques de transmission s'élève à ½.

7. Procédé selon l'une des revendications 1 à 6
**caractérisé par le fait**
**qu'**un signal de commande, destiné à l'actualisation de la mémoire (14) des données reçues et de la mémoire (16) de l'information du temps à la réception du poste mobile respectif, est transmis à tous les postes mobiles par la station de base à des intervalles réguliers, indépendamment de la transmission des données.

8. Procédé selon l'une des revendications 1 à 7
**caractérisé par le fait**
**que** les données à émettre sont mémorisées en blocs correspondant à une longueur fixe de données à transmettre.

9. Procédé selon la revendication 8
**caractérisé par le fait**
**que** la longueur des blocs correspond à la longueur d'une trame TDMA ou à l'un de ses multiples.

10. Procédé selon la revendication 8 ou 9
**caractérisé par le fait**
**que** la grandeur des mémoires de données à émettre (3, 15) et des mémoires de données reçues (4, 14) est un multiple entier de la grandeur des blocs et est choisie en fonction d'un temps maximum admissible de retard.

11. Procédé selon l'une des revendications 1 à 10
**caractérisé par le fait**
**que** l'édition des données par un poste mobile à un utilisateur ou, respectivement, par la station de base à un réseau de communication, qui lui est raccordé, est contrôlée de telle sorte que le temps de propagation des signaux, qui est influencé par la mémorisation des données du côté émission et du côté réception, est toujours constant pour les canaux de transmission.

12. Procédé selon l'une des revendications 1 à 11
**caractérisé par le fait**
**que** des pauses d'émission sont mémorisées dans les mémoires (6, 7, 16, 17) de référence de temps de la station de base et des postes mobiles sous la forme de multiples entiers d'une longueur de bloc de données et que, lors de l'édition des données par un poste mobile à un utilisateur ou, respectivement, par la station de base à un réseau de communication, qui lui est raccordé, les pauses sont réinsérées à l'instant correct, dans le flux des données, en fonction de l'information de la référence du temps mémorisée dans la mémoire (7, 16) de la référence du temps à la réception, pour rétablir l'ordre original de succession des données et des pauses.

13. Procédé selon l'une des revendications 1 à 12
**caractérisé par le fait**
**que** le dispositif de commande (5) de la station de base garantit que chaque téléphone mobile peut émettre au moins une fois dans un intervalle de temps qui correspond à la grandeur de sa mémoire des données à émettre (15).

14. Procédé selon l'une des revendications 1 à 13
**caractérisé par le fait**
**que** la station de base informe, en fonction des données mémorisées dans les mémoires de données à émettre (3, 15) de la station de base et des postes mobiles, les postes mobiles respectifs si le poste mobile émet et/ou reçoit pour une période de temps déterminée.

15. Station de base, destinée à la communication compressée sans fil avec un nombre K de postes mobiles par l'intermédiaire d'un nombre K*<K de canaux radio physiques, comprenant:
- une entrée de données,
- un dispositif de détection (1) des pauses de données destiné à la détection des pauses dans les données à émettre,
- une mémoire (3) des données à émettre destinée à la mémorisation des données à émettre,
- une mémoire (6) de la référence du temps à l'émission destinée à la mémorisation de l'information de la référence du temps des données à émettre et des pauses d'émission,
- un modulateur/concentrateur (8) destiné à la compression des données à émettre sur K* canaux radio physiques,
- un dispositif émetteur (10),
- un dispositif récepteur (11),
- un démodulateur/étateur (9) destiné à l'étalement des données reçues sur K canaux logiques de communication,
- une mémoire (4) de données reçues destinée à la mémorisation des données reçues,
- une mémoire (7) de la référence du temps à la réception destinée à la mémorisation de l'information de la référence du temps correspondant aux données reçues,
- une sortie de données,
- un dispositif de commande (5) destiné au contrôle des intervalles de temps d'émission du dispositif émetteur (10) et des postes mobiles et à l'assemblage des données reçues, mémorisées dans la mémoire (4) des données reçues, au moyen de l'information de la référence du temps mémorisée dans la mémoire (7) de la référence du temps à la réception, de telle sorte que l'ordre original de succession des données et des pauses est rétabli pour l'édition des données à la sortie de données.

16. Station de base selon la revendication 15
**caractérisée par le fait**
**que** la sortie de données est reliée à un autre réseau de communication.

17. Poste mobile, destiné à la communication compressée sans fil avec une station de base, comportant:
- une entrée de données,
- un dispositif de détection (20) des pauses de données destiné à la détection des pauses dans les données à émettre,
- une mémoire (15) des données à émettre destinée à la mémorisation des données à émettre,
- une mémoire (17) de la référence du temps à l'émission destinée à la mémorisation de l'information correspondante de temps des données à émettre et des pauses d'émission,
- un dispositif émetteur (13),
- un dispositif récepteur (12),
- une mémoire (14) de données reçues destinée à la mémorisation des données reçues,
- une mémoire (16) de la référence du temps à la réception destinée à la mémorisation de l'information de la référence du temps correspondant aux données reçues,
- une sortie de données,
- un dispositif de commande (18) destiné au contrôle du dispositif émetteur (13) en vue de l'émission de données à émettre en fonction d'intervalles dans le temps d'émission reçus de la station de base et en vue de l'assemblage des données reçues, mémorisées dans la mémoire (14) des données reçues, au moyen de l'information de référence du temps mémorisée dans la mémoire (16) de la référence du temps à la réception, de telle sorte que l'ordre original de succession des données et des pauses est rétabli, et à l'édition des données à la sortie de données.
